(19) Europäisches Patentamt
European Patent Office
Office européen des brevets

(11) **EP 2 526 586 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **11701390.4**

(22) Anmeldetag: **20.01.2011**

(51) Int Cl.:
**H01M 8/04** (2006.01)     **B64D 41/00** (2006.01)

(86) Internationale Anmeldenummer:
**PCT/EP2011/050783**

(87) Internationale Veröffentlichungsnummer:
**WO 2011/089196 (28.07.2011 Gazette 2011/30)**

(54) **VORRICHTUNG UND VERFAHREN ZUM REGELN DER LUFTFEUCHTE EINER BRENNSTOFFZELLE**

DEVICE AND METHOD FOR REGULATING AIR HUMIDITY IN A FUEL CELL

DISPOSITIF ET PROCÉDÉ DE RÉGULATION DE L'HUMIDITÉ DE L'AIR DANS UNE PILE À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2010 US 297465 P**
           **22.01.2010 DE 102010005400**

(43) Veröffentlichungstag der Anmeldung:
**28.11.2012 Patentblatt 2012/48**

(73) Patentinhaber: **Airbus Operations GmbH**
**21129 Hamburg (DE)**

(72) Erfinder:
• **ROEDERER, Karsten**
**21031 Hamburg (DE)**

• **SCHULDZIG, Hansgeorg**
**21635 Jork (DE)**

(74) Vertreter: **Kopf Westenberger Wachenhausen**
**Patentanwälte PartG mbB**
**Brienner Straße 11**
**80333 München (DE)**

(56) Entgegenhaltungen:
**EP-A2- 1 501 146**     **DE-A1- 10 226 339**
**JP-A- 2003 346 850**     **JP-A- 2005 166 601**
**US-A1- 2005 092 617**     **US-A1- 2007 196 708**
**US-B1- 6 376 111**     **US-B1- 6 762 587**

**Beschreibung**

TECHNISCHES GEBIET

Die Erfindung betrifft eine Vorrichtung zum Regeln der Luftfeuchte einer Brennstoffzelle, ein Brennstoffzellensystem, ein Verfahren zum Regeln der Luftfeuchte einer Brennstoffzelle, die Verwendung eines derartigen Brennstoffzellensystems in einem Flugzeug sowie ein Flugzeug mit mindestens einem Triebwerk, mindestens einem elektrischen Verbraucher und mindestens einem Brennstoffzellensystem.

HINTERGRUND DER ERFINDUNG

Zur Gewinnung von elektrischer Energie aus chemischen Energieträgern werden heutzutage vermehrt Brennstoffzellen eingesetzt, welche Elektroden aufweisen, die durch eine Membran oder ein Elektrolyt voneinander getrennt sind. Niedertemperatur-Protonenaustauschmembran-Brennstoffzellen (PEMFC) können gasdichte, protonenleitende Ionomermembranen aufweisen, die beispielsweise aus einem sulfonierten Tetrafluorethylen-Polymer (PTFE) hergestellt ist. Derartige Membranen sind auch unter der Bezeichnung "Nafion®-Membrane" bekannt.
Für die sehr empfindlichen Membranen ist eine Aufrechterhaltung eines ausreichenden Wassergehalts und damit einer konstanten Feuchte der Reaktionsgase notwendig, so dass die Integrität der Membranen über den gesamten Betrieb der Brennstoffzelle gewährleistet werden kann. Im Stand der Technik wird die Luftfeuchte in Brennstoffzellensystemen bzw. Brennstoffzellenstacks üblicherweise nach Erfahrungswerten mittels einer Befeuchtungssteuereinheit gesteuert, die in Abhängigkeit von Betriebsparametern der Brennstoffzelle, z.B. dem entnommenen Strom, nach einem "feed forward"-Prinzip eine Befeuchtung der Zuluft der Brennstoffzelle einstellt und gegebenenfalls auch eine Entfeuchtung der Brennstoffzellen durchführt.

Die EP1501146A2 offenbart ein Brennstoffzellensystem, sowie ein Brennstoffzellenbetriebsverfahren, welches Abnormitäten in einer Polymerelektrolyt-Brennstoffzelle erkennen und vermeiden soll.

In JP2003346850A ist eine Brennstoffzellen-Vorrichtung gezeigt, die abhängig von dem Brennstoff die erzeugte elektrische Leistung anhand des inneren Widerstandes der Brennstoffzelle ermittelt.

Die US20050092617 beschreibt eine Vorrichtung und ein Verfahren zum Messen eines inneren Widerstands einer Brennstoffzelle oder eines Brennstoffzellensystems. Dabei wird die Differenz aus einer Leerlaufspannung und einer Spannung der Brennstoffzelle unter einer definierten Last verglichen und somit der Innenwiderstand berechnet.

Die US 20070196708A1 offenbart ein Brennstoffzellensystem, welches durch ein Reaktionsgas gespeist wird und dessen Zuflussstrom in Abhängigkeit von der Last der Brennstoffzelle geregelt wird.

In der US6376111 ist ein System zum Steuern der Feuchtigkeit innerhalb einer Brennstoffzelle gezeigt. Dabei wird der Innenwiderstand der Brennstoffzelle als Indikator für die Feuchtigkeit verwendet.

Die JP2005166601A beschreibt eine Vorrichtung zum Ermitteln des Innenwiderstands des Elektrolyts einer Brennstoffzelle. Dabei wird die Entladeschlussspannung genutzt, um im μ-Sekundenbereich eine lineare Regression durchzuführen und den Innenwiderstand anhand des gemessenen Stroms auszulesen.

Da bei einer üblichen Befeuchtungssteuerung keine Informationen über den aktuellen Feuchtegrad in die Einstellung der Parameter einfließen, ist zur Aufrechterhaltung einer ausreichenden Feuchte unerlässlich, zum Schutz der empfindlichen Membranen eine Mindestfeuchte nicht zu unterschreiten. Dies hat zur Folge, dass eine herkömmliche Befeuchtungssteuerung tendenziell eine zu hohe Feuchtigkeit verursacht, die zur Senkung der Leistungsfähigkeit der Brennstoffzelle führen kann. Eine in situ (während des Betriebs) Kapazitäts- bzw. Feuchtemessung der Membranen mittels äußerer thermodynamischer Prozessvariablen, Spannung und Strom ist nicht möglich.

ZUSAMMENFASSUNG DER ERFINDUNG

Eine Aufgabe der Erfindung könnte demnach darin liegen, eine Vorrichtung zum Regeln der Luftfeuchte einer Brennstoffzelle vorzuschlagen, die ein besonders genaues Einstellen der Luftfeuchte über einen längeren Betriebszeitraum erlaubt, ohne dass die Brennstoffzelle während des Betriebs tendenziell zu feucht oder zu trocken wird und die elektrische Energieversorgung durch die Brennstoffzelle nicht unterbrochen wird.

Die Aufgabe wird gelöst durch eine Vorrichtung zum Regeln der Luftfeuchte in einer Brennstoffzelle mit den Merkmalen des unabhängigen Anspruchs 1. Vorteilhafte Weiterbildungen sind den Unteransprüchen zu entnehmen.

Es wird bei der Beschreibung der Erfindung vorausgesetzt, dass die Brennstoffzelle eine Befeuchtungssteuereinheit aufweist, die dazu eingerichtet ist, eine Luftfeuchte in der Brennstoffzelle einzustellen. Es wird ferner davon ausgegangen, dass diese Befeuchtungssteuereinheit von außen derart steuerbar ist, dass durch ein entsprechendes Signal eine Umsetzung einer vorgegebenen Luftfeuchte durchführbar ist. Im Stand der Technik existiert eine Fülle unterschiedlichster Befeuchtungssteuereinheiten, die beispielsweise die zu einer Brennstoffzelle geleitete Zuluft befeuchten können und mitunter auch eine Entfeuchtung einer Kathodenkammer oder dergleichen durchführen können. Der Gegenstand der Erfindung bezieht sich nicht auf die konkrete technische Umsetzung der Befeuchtungssteuereinheit, sondern vielmehr darauf, die notwendigen Parameter zu einer besonders exakten Einstellung der Feuchte zu ermitteln und mit diesen Parametern eine Befeuchtungssteuereinheit so anzusteuern, dass eine möglichste exakte Feuchte in der Brennstoffzelle vorliegt.

Gemäß einem ersten Aspekt der Erfindung weist die Vorrichtung zum Regeln der Luftfeuchte in einer Brennstoffzelle mindestens eine Prozessoreinheit und mindestens eine Erfassungseinheit auf, wobei die Prozessoreinheit einen ersten Signaleingang, der zum Verbinden mit einem Signal aus der Erfassungseinheit eingerichtet ist und einen ersten Signalausgang, der zum Verbinden mit einem Steuereingang einer Befeuchtungssteuereinheit der Brennstoffzelle eingerichtet ist, aufweist. Die Erfassungseinheit weist mindestens einen ersten Spannungseingang auf, der zum Verbinden mit der Brennstoffzelle und zum Erfassen der Abgabespannung der Brennstoffzelle eingerichtet ist, wobei die Prozessoreinheit zusätzlich dazu eingerichtet ist, aus einem Spannungsverlauf an der Brennstoffzelle eine Zeitkonstante der Brennstoffzelle zu ermitteln und in Abhängigkeit von der ermittelten Zeitkonstante die Befeuchtungssteuereinheit anzusteuern.

Die Erfassungseinheit kann im einfachsten Falle als A/D-Wandler ausgeführt werden, die eine analoge Spannung an ihrem ersten Spannungseingang erfassen kann und einen in digitale Daten umgewandelten Spannungswert an einem ersten Datenausgang der Prozessoreinheit bereitstellen kann. Abhängig von einer zu erwartenden Zeitkonstante ist eine entsprechende Genauigkeit des A/D-Wandlers notwendig, die sich beispielsweise durch eine Samplingfrequenz (Abtastrate) und Auflösung bestimmt.

Zur näheren Erläuterung der erfindungswesentlichen Aspekte sei zunächst darauf hingewiesen, dass eine Brennstoffzelle prinzipiell mit einem Ersatzschaltbild repräsentiert werden könnte, in dem ein durch das Material einer Membran und die physikalischen Randbedingungen bestimmter Membranwiderstand, ein Ladungsdurchtrittswiderstand und eine Doppelschichtkapazität miteinander verknüpft sind. Der Ladungsdurchtrittswiderstand und die Doppelschichtkapazität sind dabei parallel geschaltet, während der Membranwiderstand mit dieser Parallelschaltung in Reihe verbunden ist. Der Gesamtwiderstand des Ersatzschaltbildes kann als Polarisationswiderstand bezeichnet werden.

Die zwei Gasräume voneinander trennende Membran leitet die zur Gesamtreaktion notwendigen Protonen von einer Wasserstoff- auf eine Luftseite. Neben der Möglichkeit des Wassertransports ist die Membran auch in der Lage, Wasser aufzunehmen, wobei der Wassergehalt der Membran allgemein ein Gleichgewicht mit der umgebenden Feuchte anstrebt. Generell steigt die Protonenleitfähigkeit mit zunehmendem Wassergehalt der Membran. Der in der Beschreibung der Erfindung "Membranwiderstand" genannte ohmsche Widerstand bestimmt sich schließlich aus der Protonenleitfähigkeit der Membran und der Elektronenleitfähigkeit einer auf der Elektrode eventuell angeordneten Diffusionsschicht, die der besseren Verteilung der Reaktionsgase und gleichzeitig zur Ableitung des entnommenen Stroms dient, sowie der Elektronenleitfähigkeit einer Gaskanalstruktur, die in elektrisch leitenden Endplatten zur Versorgung der Brennstoffzelle mit den Reaktionsgasen integriert sein kann. Die Elektronenleitfähigkeit kann, anders als die Protonenleitfähigkeit der Membran, allgemein als konstant angesehen werden. Der Membranwiderstand steigt exponentiell mit abnehmender Feuchte.

Die Reaktionen in der Brennstoffzelle finden in zwei Elektroden (eine Anode und eine Kathode) statt. An der Phasengrenze stehen sich zwei elektrische Potentiale gegenüber, wodurch eine elektrochemische Doppelschicht mit einer wesentlich vom geometrischen Aufbau der Brennstoffzelle abhängigen Doppelschichtkapazität gebildet wird. Diese ist ebenfalls von der Feuchte der Brennstoffzelle abhängig.

Der Polarisationswiderstand ist daher generell von der Feuchte der Brennstoffzelle abhängig und weist für jeden Brennstoffzellenart einen charakteristischen Verlauf auf.

Die Brennstoffzelle und das sie repräsentierende Ersatzschaltbild weisen ein durch die oben genannten Komponenten charakterisiertes nichtlineares Zeitverhalten auf, durch das eine an der Brennstoffzelle anliegende Abgabespannung beispielsweise aperiodisch auf eine sprunghafte Änderung eines durch elektrische Verbraucher verursachten Entnahmestroms reagiert, bei einem gleichbleibenden Entnahmestrom allerdings konstant ist. Besonders prägend ist das kapazitive Verhalten, welches mit der Speicherung von Energie verbunden ist und dadurch ein zeitverzögerndes Verhalten entsprechend einem PT1-Glied aufzeigt. Das dynamische Verhalten der Brennstoffzelle kann daher durch eine feuchteabhängige Zeitkonstante definiert werden. Ziel der erfindungsgemäßen Vorrichtung ist nun, dieses dynamische Verhalten zu nutzen, um die Befeuchtungsregelung optimal einstellen zu können.

Erfindungsgemäß ist eine Erfassungseinheit mit der Brennstoffzelle verbunden, um die dort anliegende Abgabespannung zu erfassen, die im stationären Fall idealerweise gleichbleibend sein wird. Um die Zeitkonstante zu identifizieren, die momentan in der betreffenden Brennstoffzelle vorliegt, ist eine Untersuchung des dynamischen Verhaltens der Brennstoffzelle notwendig. Da bei stationärem Betrieb keine derart schwankenden Entnahmeströme zu erwarten sind, die ein dynamisches Verhalten regelmäßig eindeutig bestimmbar machen, wird erfindungsgemäß eine kurze Unterbrechung zwischen der Brennstoffzelle und den elektrischen Verbrauchern durchgeführt und die an der Brennstoffzelle abgenommene Abgabespannung in Form einer Sprungantwort erfasst und ausgewertet. Dieser charakteristische, zumindest teilweise mit einer Exponentialfunktion auftretende abfallende Verlauf wird von der Erfassungseinheit an die Prozessoreinheit geleitet, die daraus die Zeitkonstante bestimmt.

Mathematische Verfahren zur Analyse von Sprungantworten zur Bestimmung von Parametern eines dynamischen Systems sind im Stand der Technik hinreichend bekannt.

Ziel des Verfahrens ist, einen Vergleich zwischen einer durch Messung festgestellten aktuellen Zeitkonstante oder einer mit einer Zeitkonstante ähnlichen dimensionslosen Größe $\tau$ der Brennstoffzelle mit einer anfänglichen Zeitkonstante oder mit einer dimensionslosen und einer Zeitkonstante ähnlichen Größe der gleichen Brennstoffzelle zu vergleichen, die beispielsweise direkt nach der Fertigung der Brennstoffzelle bei idealen Feuchtebedingungen ermittelt werden könnte. Durch diesen Vergleich werden Abweichungen in der Zeitkonstante erkennbar, die einen Rückschluss über den momentanen Befeuchtungszustand erlauben. Eine geringer werdende Eigenzeit könnte beispielsweise für eine übermäßige Befeuchtung sprechen.

Die Regelungsstrategie könnte dahingehend aufgestellt werden, dass zunächst die Befeuchtung der Brennstoffzelle sukzessive unter Beobachtung der Zeitkonstante verstärkt wird, bis sich die Zeitkonstante verschlechtert, d.h. verringert. Anschließend könnte die Befeuchtung schrittweise wieder reduziert werden, bis keine Verbesserung der Zeitkonstante mehr möglich ist. Weiter anschließend wird die Befeuchtung wieder verstärkt, bis die Zeitkonstante wieder sinkt. Die Befeuchtung pendelt folglich um ihr Optimum.

Im Falle eines aus mehreren Brennstoffzellen zusammengesetzten Brennstoffzellenstapels wird der gesamte Stapel nach dieser Strategie geregelt, unter Beobachtung der "schlechtesten" individuellen Zeitkonstante einer der Brennstoffzellen. Somit wird erreicht, dass sich die Befeuchtung innerhalb des Brennstoffzellenstapels bei globaler Betrachtung an der optimalen Befeuchtungsgrenze befindet.

Gemäß einer vorteilhaften Weiterbildung der erfindungsgemäßen Vorrichtung ist die Prozessoreinheit dazu eingerichtet, neben einer Zeitkonstante oder einem einer Zeitkonstante ähnlichen dimensionslosen Wert $\tau$ zumindest die Kapazität und/oder den Membranwiderstand der Brennstoffzelle zu ermitteln. Dies könnte dadurch realisiert werden, dass die Sprungantwort der Spannung einer Brennstoffzelle bei plötzlicher Abschaltung von Verbrauchern sich im Wesentlichen in zwei Teile gliedern könnte. Ein erster schneller Spannungsaufbau, bei dem weder die Aufladung der Doppelschicht, kinetische Prozesse oder Massentransportprozesse zu erwarten sind, charakterisiert ohmsche Verluste, die insbesondere dem Membranwiderstand zuzuschreiben sind. Dieser könnte sich aus dem Quotienten des ersten schnellen Spannungsaufbaus und der Stromdifferenz berechnen lassen. Abhängig von der Bauart und Größe der Brennstoffzelle könnte sich die sprunghafte Änderung der Abgabespannung mehr oder weniger deutlich ergeben, so dass der Membranwiderstand nur dann mit dieser Methode relativ genau bestimmen lassen könnte, wenn der Spannungsverlauf ausgeprägt ist.

Der weitere Verlauf der Sprungantwort der Spannung wird durch das dynamische Verhalten der Doppelschichtkapazität der Brennstoffzelle dominiert und entspricht bei globaler Betrachtung des eines Verzögerungsglieds erster Ordnung, zu dessen Bestimmung eine Exponentialfunktion zum Einsatz kommen könnte.

Gemäß einer vorteilhaften Weiterbildung der erfindungsgemäßen Vorrichtung weist die Prozessoreinheit einen zweiten Signalausgang auf, der mit einer Unterbrechereinheit verbunden ist. Die Unterbrechereinheit ist dazu eingerichtet, die Spannungsabgabe der Brennstoffzelle über einen vorbestimmten Zeitraum T zu unterbrechen. Dies hat zur Folge, dass während des regulären Betriebs der Brennstoffzelle ein für die Ermittlung der Zeitkonstante notwendiger Spannungsverlauf erfasst werden kann, wobei das Ansteuern der Unterbrechereinheit bevorzugt automatisch und in vorgegebenen zeitlichen Abständen durchgeführt werden kann. Dadurch wird eine permanente Überwachung des Zustands der Brennstoffzelle sichergestellt.

In einer vorteilhaften Weiterbildung der erfindungsgemäßen Vorrichtung werden mehrere Erfassungseinheiten eingesetzt, die mit einem Satz von mehreren Brennstoffzellen in Form eines oder mehrerer Brennstoffzellenstapel (überwiegend auch als "Brennstoffzellenstack" bekannt) verbindbar sind und die Prozessoreinheit dazu eingerichtet, die Verbindung zwischen sämtlichen Brennstoffzellen einzeln oder in Gruppen und den elektrischen Verbrauchern über eine Unterbrechereinheit über einen Zeitraum T zu unterbrechen. Die Prozessoreinheit ist demnach bevorzugt dazu eingerichtet, während des Unterbrechungszeitraums T sämtliche Spannungsverläufe sämtlicher Brennstoffzellen zu erfassen. Selbstverständlich ist die Prozessoreinheit auch hier dazu eingerichtet, die jeweiligen Zeitkonstanten aus den ermittelten Spannungsverläufen nach den oben genannten Verfahren zu bestimmen.

In einer vorteilhaften Weiterbildung der erfindungsgemäßen Vorrichtung ist eine Erfassungseinheit mit mehreren zu einer Gruppe zusammengeschalteten Brennstoffzellen verbindbar und erfasst den Spannungsverlauf der Gruppe von Brennstoffzellen. Dies reduziert die Komplexität der erfindungsgemäßen Vorrichtung, insbesondere bei Brennstoffzellenstapeln, die eine hohe Anzahl von einzelnen Brennstoffzellen aufweisen.

Erfindungsgemäß ist die Prozessoreinheit dazu eingerichtet, die ermittelte Zeitkonstante der Brennstoffzelle mit einer vorgegebenen Zeitkonstante der Brennstoffzelle zu vergleichen und bei Abweichung von der vorgegebenen Zeitkonstante um mehr als eine vorgegebene Toleranz die Befeuchtungssteuerungseinheit zum Ändern der Befeuchtung anzusteuern. Dadurch kann gewährleistet werden, dass stets die vorgegebene Zeitkonstante der Brennstoffzelle vorliegt und die Brennstoffzelle auch über einen längeren Zeitraum eine gleichbleibende Leistung bereitstellen kann.

In einer vorteilhaften Weiterbildung der erfindungsgemäßen Vorrichtung ist die Prozessoreinheit dazu eingerichtet, den Membranwiderstand an der Membran der Brennstoffzelle durch die oben genannten Eigenschaften zu bestimmen und bei Überschreitung eines vorgegebenen Membranwiderstands die Befeuchtung zu erhöhen. Dadurch kann verhindert werden, dass Membranen einzelner Brennstoffzellen eines Brennstoffzellenstapels einen ernstzunehmenden Defekt aufweisen, der auch durch nachträgliche Befeuchtung nicht wieder zu beheben ist.

Da die Brennstoffzellen nicht so exakt gefertigt werden können, dass sämtliche Membranen stets die gleiche Feuchtigkeit aufweisen, ist dies eine besonders zu bevorzugende Möglichkeit, die maximale Leistung einer Vereinigung von Brennstoffzellen zu erlangen.

Eine vorteilhafte Weiterbildung der erfindungsgemäßen Vorrichtung weist einen Pufferspeicher auf, der dazu eingerichtet ist, bei unterbrochener Verbindung zwischen der Brennstoffzelle und den elektrischen Verbrauchern diese für den Zeitraum T mit elektrischer Spannung zu versorgen. Je nach Größe des Zeitraums T und Höhe des statischen Entnahmestroms kann der Pufferspeicher unterschiedlich geartet sein. Ist ein größerer Zeitraum T aufgrund besonders großer Brennstoffzellen und damit größerer Zeitkonstanten zum Unterbrechen notwendig, kann der Pufferspeicher als ein Akku oder dergleichen ausgeführt sein, während bei sehr kurzen Zeiträumen T auch ein Kondensator mit einer ausreichend hohen Kapazität ausreichen.

Gemäß einer vorteilhaften Weiterbildung der erfindungsgemäßen Vorrichtung beträgt der Unterbrechungszeitraum T zwischen 50 und 150 ms. Die Zeitkonstante des Spannungsabfalls der Brennstoffzelle, die durch die Erfassungseinheit abgedeckt werden muss, ist entsprechend der Größe der Doppelschichtkapazität häufig sehr klein und liegt deutlich im Bereich unter einer Sekunde. Bei einer großen Anzahl von zur Zeit erhältlichen Brennstoffzellen, beispielsweise für die Verwendung in einem Brennstoffzellenstapel, ist eine Unterbrechung dieser Dauer ausreichend, um einen charakteristischen Spannungsverlauf und damit auch eine Kapazität und andere Parameter ermitteln zu können.

Gemäß einer ebenso bevorzugten Weiterbildung der erfindungsgemäßen Vorrichtung beträgt der Unterbrechungszeitraum T zwischen 150 und 500 ms. Ein derartig ausgedehnter Unterbrechungszeitraum T könnte sich für die Erfassung von Spannungsverläufen von größeren Brennstoffzellen anbieten, wobei im Gegenzug auch die Genauigkeitsforderungen an die Erfassungseinheiten reduziert werden könnten.

Gemäß einer vorteilhaften Weiterbildung wird ein niederohmiger elektrischer Nebenschlusswiderstand (auch als "Shunt" bekannt) eingesetzt, um den von der Brennstoffzelle bereitgestellten Strom bzw. den von den elektrischen Verbrauchern entnommenen Entnahmestrom ermitteln zu können. Die erfindungsgemäße Vorrichtung kann ferner dazu eingerichtet sein, Soll- und Ist-Zeitkonstanten für verschiedene Entnahmeströme zu ermitteln und unter Berücksichtigung des Stroms miteinander zu vergleichen.

Ferner wird die Aufgabe auch durch ein Verfahren zum Regeln der Luftfeuchte einer Brennstoffzelle gemäß Anspruch 10 gelöst, das im Wesentlichen die Merkmale des Unterbrechens der Verbindung zwischen der Brennstoffzelle und elektrischen Verbrauchern, Erfassen der Abgabespannung der Brennstoffzelle für einen Zeitraum T, Ermitteln einer Zeitkonstante der Brennstoffzelle, Vergleichen der Zeitkonstante mit einer vorgegebenen Zeitkonstante und Ändern der Befeuchtung der Brennstoffzelle aufweist. Zusätzlich könnte auch ein Ermitteln einer Doppelschichtkapazität der Brennstoffzelle und/oder eines Membranwiderstands erfolgen.

Die Aufgabe könnte weiterhin auch durch ein Computerprogrammprodukt gelöst werden, das eine Prozessoreinheit dazu veranlassen kann, das erfindungsgemäße Verfahren auszuführen, wenn es von der Prozessoreinheit ausgeführt wird.

Die Aufgabe wird ferner durch ein Brennstoffzellensystem gelöst, das aus einem Stapel von mehreren Brennstoffzellen besteht, an denen mindestens eine Erfassungseinheit angeordnet ist, die mit einer Prozessoreinheit verbunden ist. Ferner weist das erfindungsgemäße Brennstoffzellensystem eine Unterbrechereinheit auf, die von der Prozessoreinheit derart angesteuert werden kann, dass die Spannungsversorgung der elektrischen Verbrauchern durch das erfindungsgemäße Brennstoffzellensystem für einen Zeitraum T unterbrochen wird. Optional weist das erfindungsgemäße Brennstoffzellensystem weiterhin einen Pufferspeicher auf, der für die Stromversorgung der elektrischen Verbraucher für den Unterbrechungszeitraum T sorgt.

Schließlich wird die Aufgabe auch die Verwendung eines Brennstoffzellensystems in einem Flugzeug sowie durch ein Flugzeug mit mindestens einem elektrischen Verbraucher und mit mindestens einem erfindungsgemäßen Brennstoffzellensystem gelöst.

KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination die Gegenstände der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.

Figur 1a bis 1c zeigen ein Ersatzschaltbild einer Brennstoffzelle, die spezifische Leitfähigkeit einer Membran sowie eine Polarisationskurve.

Figur 2 zeigt eine schematische Ansicht der erfindungsgemäßen Vorrichtung.

Figur 3 zeigt eine exemplarische Darstellung einer Sprungantwort.

Figur 4 zeigt eine blockbasierte Darstellung des erfindungsgemäßen Verfahrens.

Figur 5 zeigt ein Flugzeug, das mindestens mit einem erfindungsgemäßen Brennstoffzellensystem ausgerüstet ist.

DETAILLIERTE DARSTELLUNG EXEMPLARISCHER

AUSFÜHRUNGSFORMEN

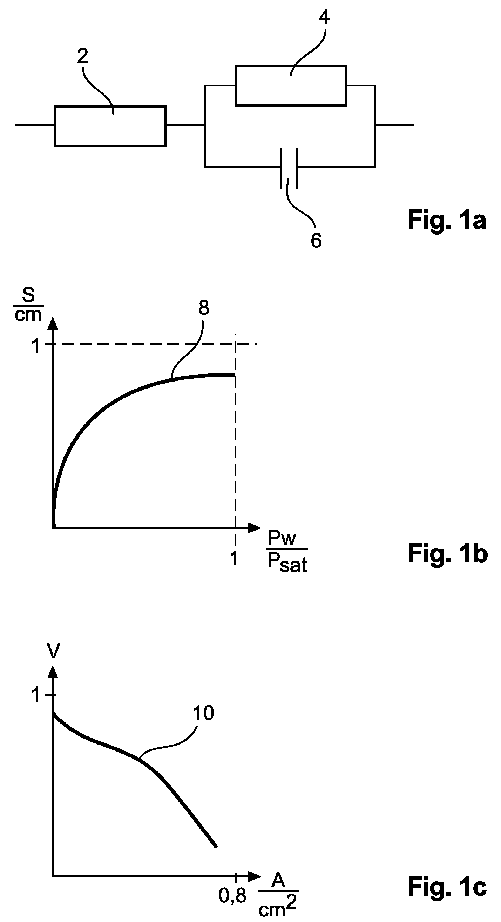

Fig. 1a zeigt ein mögliches, vereinfachtes Ersatzschaltbild einer Brennstoffzelle, das aus einem ohmschen Membranwiderstand 2, einem ohmschen Ladungsdurchtrittswiderstand 4 und einer Doppelschichtkapazität 6 besteht, wobei der Ladungsdurchtrittswiderstand 4 und die Doppelschichtkapazität 6 parallel geschaltet sind und mit dem Membranwiderstand 2 in Reihe verbunden sind. Das Ersatzschaltbild lässt anschaulich den dynamischen Zusammenhang zwischen Entnahmestrom und Abgabespannung erkennen.

Fig. 1b stellt den Zusammenhang zwischen der Leitfähigkeit einer Membran einer PEM-Brennstoffzelle und der aufgenommenen Wassermenge (Feuchte der Membran) in Form einer Leitfähigkeitskurve 8 dar, wobei die Feuchte als Quotient aus Wasserdampfpartialdruck $p_w$ und dem Sättigungspartialdruck $p_{sat}$ angegeben wird. Es ist eine nahezu asymptotische Annäherung eines Maximalwerts mit steigender Feuchte zu sehen, wobei eine drastische Verschlechterung der Leitfähigkeit bei geringer Feuchte unter 30% zu erkennen ist.

In Fig, 1c wird die sogenannte Polarisationskurve 10 dargestellt, die einen Zusammenhang zwischen Abgabespannung und Stromdichte in A/cm2 wiedergibt. Die Polarisationskurve für eine hohe relative Feuchtigkeit des zu der Brennstoffzelle geführten Wasserstoffs erwirkt die größte Effektivität der Brennstoffzelle.

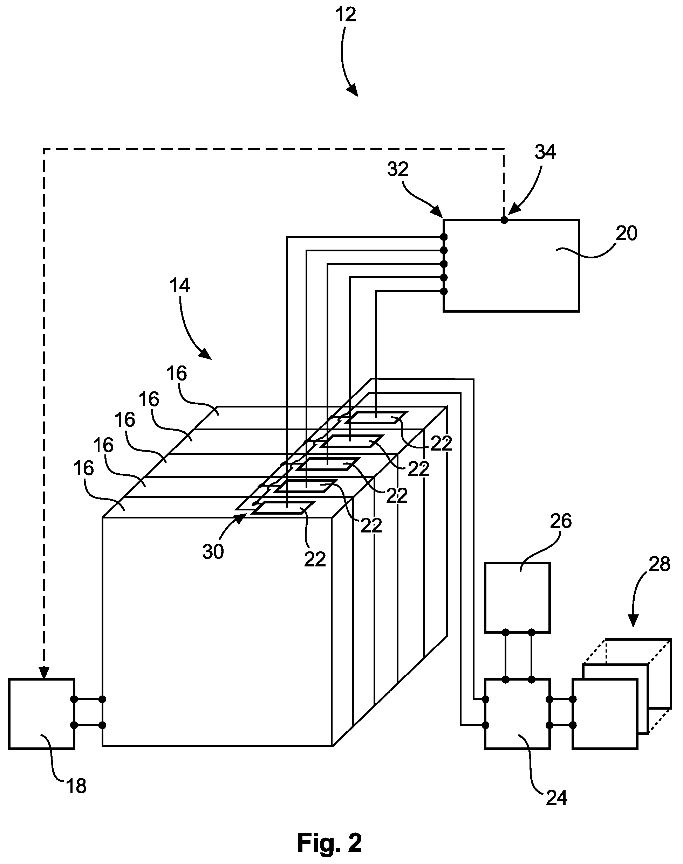

Figur 2 zeigt ein erfindungsgemäßes Brennstoffzellensystem 12, das aus einem schematisch dargestellten Brennstoffzellenstapel 14 mit mehreren Brennstoffzellen 16 und einer Befeuchtungssteuereinheit 18, einer Prozessoreinheit 20, mehreren auf den einzelnen Brennstoffzellen 16 angeordneten Erfassungseinheiten 22, einer Unterbrechereinheit 24 und einem Pufferspeicher 26 besteht. Elektrische Verbraucher 28 sind über die Unterbrechereinheit 24 mit dem Brennstoffzellenstapel 14 verbunden und lassen sich bei Aktivierung der Unterbrechereinheit 24 mit dem Pufferspeicher 26 koppeln, der ebenfalls mit der Unterbrechereinheit 24 verbunden ist. An dieser Stelle sei darauf hingewiesen, dass die erfindungsgemäße Vorrichtung zum Regeln der Feuchte in einer Brennstoffzelle sämtliche Komponenten des erfindungsgemäßen Brennstoffzellensystems 12 aus Fig. 2 umfasst, mit Ausnahme des Brennstoffzellenstacks 14 und der elektrischen Verbraucher 28.

Die Brennstoffzellen 16 des Brennstoffzellenstapels 14 sind bevorzugt als Niedertemperatur-Protonenaustauschmembran-Brennstoffzellen realisiert und werden durch die Befeuchtungssteuereinheit 18 derart befeuchtet, dass die Membranen der Brennstoffzellen 16 nicht austrocknen und eine maximale Protonenleitfähigkeit besitzen. Dadurch können die Brennstoffzellen 16 eine größtmögliche Leistung bereitstellen, ohne dass die Gefahr der Austrocknung und Zerstörung der empfindlichen Membranen droht. Die Art der Befeuchtungssteuereinheit ist in diesem Zusammenhang irrelevant. Im Stand der Technik existiert eine Reihe von Befeuchtungssteuereinheiten, die etwa eine weitestgehende Sättigung der Reaktionsgase mit Wasserdampf bewerkstelligen und mitunter auch Reaktionswasser aus einem Kathodenraum oder dergleichen aktiv entfernen. Das erfindungsgemäße Brennstoffzellensystem 12 kann nahezu mit jeder beliebigen Art einer Befeuchtungssteuereinheit 18 betrieben werden, die auf irgend eine Weise von außen in ihrer Wirkung beeinflussbar ist, bevorzugt über einen entsprechenden Signaleingang oder durch eine mechanische Verstellung, die mit Hilfe eines Signals über einen Aktuator auslösbar ist.

Erfindungsgemäß wird beim Betrieb des Brennstoffzellensystems 12 über die Prozessoreinheit 20 die Unterbrechereinheit 24 manuell oder automatisch in vorgegebenen zeitlichen Abständen dazu veranlasst, die elektrischen Verbraucher 28 physikalisch über einen vorgegebenen Zeitraum T von den Brennstoffzellen 16 zu trennen, so dass die Brennstoffzellen 16 an ihren Spannungsausgängen 30 jeweils eine abfallende Spannung bereitstellen, die die Sprungantwort auf den sprunghaft geänderten Entnahmestrom darstellt. Über die bevorzugt als A/D-Wandler ausgeführten Erfassungseinheiten 22, die in der Nähe der Spannungsausgänge 30 platziert sein könnten, können die Verläufe der jeweils bereitgestellten Spannungen der einzelnen Brennstoffzellen 16 erfasst und an erste Signaleingänge 32 der Prozessoreinheit 20 geleitet werden.

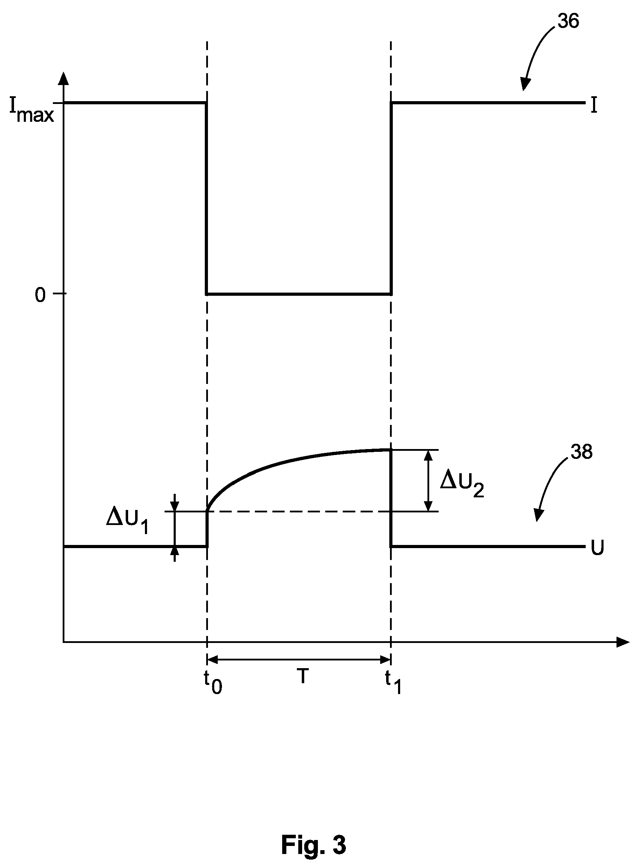

Die Prozessoreinheit 20 führt bevorzugt einen Algorithmus aus, der zur Bestimmung der dynamischen und statischen Parameter des Ersatzschaltbildes aus Fig. 1 angepasst ist, wie in Fig. 3 anhand eines entsprechenden Diagramms erläutert wird. Ausschlaggebend für die Regelung ist die Bestimmung einer Zeitkonstante des dynamischen Systems der Brennstoffzelle, oder daraus abgeleiteter Parameter. Die Parameter können dann mit Parametern verglichen werden, die beispielhaft bei einer unter Idealbedingungen betriebenen Brennstoffzelle erfasst wurden. Generell könnte es ausreichen, eine dimensionslose Größe $\tau$ zu ermitteln, die eine Verzögerung bzw. eine Zeitkonstante repräsentiert, um dieses $\tau$ mit vorgegebenen Werten für $\tau$ von "frischen" Brennstoffzellen zu vergleichen, die direkt nach deren Herstellung unter Idealbedingungen ermittelt werden. Weiterhin könnte auch vorteilhaft sein, in Abhängigkeit des Entnahmestroms einen Satz von verschiedenen $\tau$ zu ermitteln, die dann je nach momentanem Entnahmestrom mit dem momentan ermittelten $\tau$ verglichen werden.

Die Befeuchtung der Brennstoffzelle könnte etwa sukzessive unter Beobachtung der Zeitkonstante oder daraus abgeleiteter Parameter verstärkt werden, bis sich die Zeitkonstante verringert. Eine schrittweise Reduktion der Befeuchtung könnte sich danach anbieten, bis keine Verbesserung der Zeitkonstante mehr möglich ist. Weiter anschließend könnte die Befeuchtung wieder verstärkt werden, bis die Zeitkonstante wieder sinkt, so dass eine Pendelbewegung um einen Optimalwert der Befeuchtung erfolgt.

Abweichend oder zusätzlich hierzu könnten auch Werte für einen Membranwiderstand und/oder einer Doppelschichtkapazität und/oder einen Ladungsdurchtrittswiderstand ermittelt werden. Ein durch den ersten, sprunghaft verlaufenden Teil einer Sprungantwort ermittelter Membranwiderstand könnte dahingehend analysiert werden, ob die Membran zu trocken ist und sowohl eine zu geringe Ionenleitfähigkeit aufweist, als auch aufgrund Trockenheit reißen könnte.

Durch Analyse des weiteren Verlaufs der Sprungantwort ist ein Wert für die Doppelschichtkapazität ermittelbar, aus der eine Aussage zur momentanen Befeuchtung ableitbar ist. Durch Vergleich einer ermittelten Kapazität mit einer vorgegebenen Kapazität kann festgestellt werden, ob eine oder mehrere der Brennstoffzelle 16 eine außerhalb einer geduldeten Toleranz befindliche Kapazität aufweist, was beispielsweise auf eine zu starke aktive Befeuchtung schließen lässt. Ist dies der Fall, stellt die Prozessoreinheit 20 ein Signal bereit, das über einen ersten Signalausgang 34 an die Befeuchtungssteuereinheit 18 gesendet wird, um diese dazu zu veranlassen, die Befeuchtung um einen bestimmten Betrag zu reduzieren.

Da der Brennstoffzellenstapel 14 aus einer Reihe von Brennstoffzellen 16 besteht, ist es vorteilhaft, sämtliche Brennstoffzellen 16 mit jeweils einer Erfassungseinheit 22 auszustatten, so dass auch die Prozessoreinheit 20 in der Lage sein muss, alle Daten aller Erfassungseinheiten 22 verarbeiten zu können. Bevorzugt werden die Sprungantworten aller Brennstoffzellen 16 einzeln analysiert, um sämtliche statischen und dynamischen Parameter sämtlicher Brennstoffzellen 16 zu erhalten.

Da eine Befeuchtungssteuereinheit 18 häufig nur in der Lage ist, die Befeuchtung sämtlicher Brennstoffzellen 16 in einem Brennstoffzellenstapel als Gesamtheit bereitzustellen, ist üblicherweise keine individuelle Befeuchtung der einzelnen Brennstoffzellen 16 möglich. Aus diesem Grunde ist es erforderlich, die Befeuchtung des Brennstoffzellenstapels 14 als Gesamtheit und nicht der Brennstoffzellen 16 zu optimieren. Bevorzugt wird dabei darauf geachtet, dass die Regelung der Befeuchtung für keine Brennstoffzelle 16 zu niedrig erfolgt und dadurch keinen Membrandefekt aufgrund Trockenheit auslöst. Gleichzeitig darf die Befeuchtung auch nicht zu stark sein, so dass die Leistungen der Brennstoffzellen 16 aufgrund der Überschreitung ihres Befeuchtungsoptimums wieder deutlich sinken. Dementsprechend sollte die Befeuchtung möglichst nach der "schlechtesten" Brennstoffzelle 16 gerichtet werden, die beispielsweise eine größte Abweichung von vorgegebenen Sollwerten aufweist, oder zu trocken erscheint.

Bevorzugt ist die Prozessoreinheit 20 dazu eingerichtet, experimentell bestimmte ideale statische und dynamische Parameter einer Brennstoffzelle 16 in einer Speichereinheit zu speichern und bei Bedarf abzurufen, um die ermittelten statischen und dynamischen Parameter der Brennstoffzellen 16 mit den idealen Parametern vergleichen zu können.

Sollte die Anzahl der Brennstoffzellen 16 relativ hoch sein, so dass eine nicht ganz optimal laufende Brennstoffzelle 16 nicht besonders auffällt, könnte auch vorteilhaft sein, aus den ermittelten statischen und dynamischen Parametern eine mögliche Leistung des Brennstoffzellenstapels 14 zu berechnen und die Befeuchtung derart einzustellen, dass die mögliche Leistung maximiert wird.

Nach dem vorgegebenen Zeitraum T werden die elektrischen Verbraucher 18 wieder mit dem Brennstoffzellenstapel 4 verbunden. Nach einer weiteren Phase herkömmlichen Betriebs kann die nächste Unterbrechung für den Zeitraum T durchgeführt werden, nach der Kenntnis über die Änderung der Kapazitäten der einzelnen Brennstoffzellen 6 vorliegen. Sobald sämtliche Brennstoffzellen 6 eine Kapazität aufweisen, die innerhalb der Toleranzgrenze liegt, ist die Befeuchtung als ausreichend anzusehen.

Fig. 3 zeigt eine schematische Ansicht eines unstetigen Entnahmestromverlaufs 36 mit einer daraus folgenden Sprungantwort in Form eines Verlaufs einer Abgabespannung 38 einer Brennstoffzelle. Der Entnahmestrom ist bis zur Zeit $t_0$ auf einem maximalen Niveau, d.h. elektrische Verbraucher werden von der Brennstoffzelle 16 normal mit Strom versorgt. Anschließend erfolgt für einen Zeitraum T, d.h. bis zu einer Zeit $t_1$, eine Unterbrechung des Stroms, der von seinem Maximalwert auf 0 zurückgeht. Der sprunghafte Abfall des Stroms führt zu einer Sprungantwort der Spannung die zunächst - je nach Bauart und Baugröße der Brennstoffzelle mehr oder weniger messbar - nahezu unmittelbar um einen Wert $\Delta U_1$ steigt. Anschließend erfolgt eine deutlichere verzögerte Zunahme der Spannung um $\Delta U_2$, was durch ein erneutes Einschalten der Verbraucher und einem Anstieg des Stroms auf $I_{max}$ unterbrochen wird. Ist der Wert $\Delta U_1$ aus der erfassten Sprungantwort deutlich entnehmbar, könnte sich daraus der Membranwiderstand zu

$$R_M = \frac{\Delta U_1}{I_{max}}$$

berechnen lassen. Liegt aufgrund der Bauart oder -größe ein unerheblicher oder kaum messbarer sprunghafter Spannungsverlauf $\Delta U_1$ vor, kann die Analyse der Sprungantwort der Brennstoffzelle 16 auf die Ermittlung lediglich einer Zeitkonstante aus der verzögerten Spannungsänderung beschränkt werden.

Der zeitliche Spannungszuwachs über $\Delta U_2$ ge-

horcht im Wesentlichen der folgenden Beziehung:

$$\Delta U_2 = R_{ct}\left(1 - e^{-\frac{t}{R_{ct}C_{dt}}}\right)I_{\max},$$

wobei $R_{ct}$ der Ladungsdurchtrittswiderstand ist und $C_{dt}$ die Doppelschichtkapazität. Diese Gleichung kann beispielsweise über ein iteratives oder analytisches Verfahren gelöst werden und Informationen über den Ladungsdurchtrittswiderstand und die Doppelschichtkapazität liefern. Die Gleichung könnte auch dahingehend vereinfacht werden, dass die Gesamtheit aus Ladungsdurchtrittswiderstand und Doppelschichtkapazität in Parallelschaltung ermittelt wird und mit einem vorher experimentell ermittelten Wert verglichen wird.

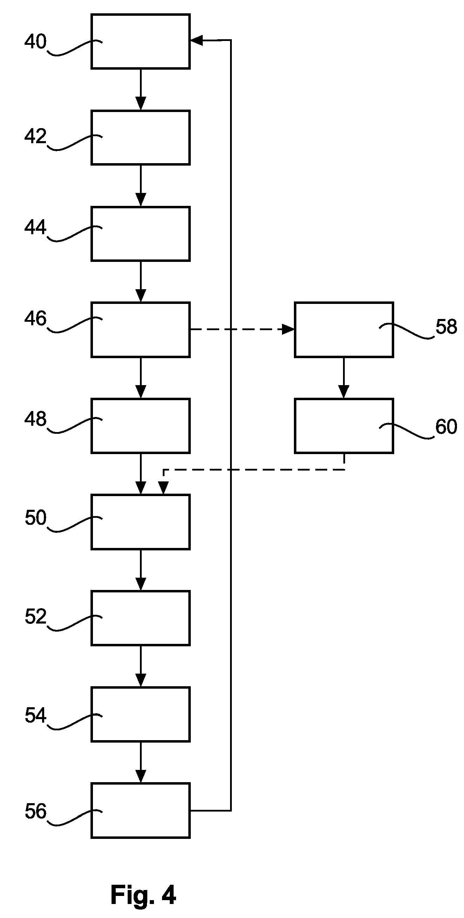

Fig. 4 zeigt eine blockbasierte Darstellung eines erfindungsgemäßen Verfahrens. Während eines Betriebs einer Brennstoffzelle 16 bzw. eines Brennstoffzellenstapels 14 mit mehreren Brennstoffzellen 16 wird die Verbindung zu elektrischen Verbrauchern 28 kurzzeitig für einen Zeitraum T unterbrochen 38 und mittels Erfassungseinheiten 22 die Abgabespannung an den betreffenden Brennstoffzellen 16 erfasst 40. Die erfassten Spannungsverläufe werden an eine Prozessoreinheit 20 übermittelt 42, die anhand eines Programms die Spannungsverläufe auswertet 44, um die Zeitkonstanten des dynamischen Systems der Brennstoffzellen zu ermitteln 46. Die Zeitkonstanten werden mit vorgegebenen Zeitkonstanten verglichen 48, wobei bei Abweichung von den vorgegebenen Zeitkonstanten außerhalb einer tolerierbaren Grenze durch mindestens eine der Brennstoffzellen 16 eine Befeuchtungssteuereinheit 18 von der Prozessoreinheit 20 dazu veranlasst wird 50, die Befeuchtung der Brennstoffzellen 16 zu ändern 52.

Zusätzlich dazu kann die Befeuchtung stets erhöht werden 54, bis sich die Zeitkonstante verringert. Anschließend könnte die Befeuchtung schrittweise wieder reduziert werden 56, bis keine weitere Erhöhung der Zeitkonstante mehr möglich ist. Weiter anschließend wird obiger Schritt wiederholt, so dass die Befeuchtung stets um ihr Optimum pendelt.

Statt der Betrachtung der Zeitkonstanten könnte auch die Kapazität des Ersatzschaltbildes jeder der Brennstoffzellen 16 ermittelt werden 58. Die Kapazitäten werden mit einer vorgegebenen Kapazität verglichen 60 und die obigen Verfahrensschritte können ausgeführt werden. Durch das erfindungsgemäße Verfahren kann die Befeuchtung einer Brennstoffzelle 6 oder eines Brennstoffzellenstapels 14 mit mehreren Brennstoffzellen derart geregelt werden, dass keine der Brennstoffzellen 16 zu feucht oder zu trocken ist und dadurch die Abgabeleistung sinkt.

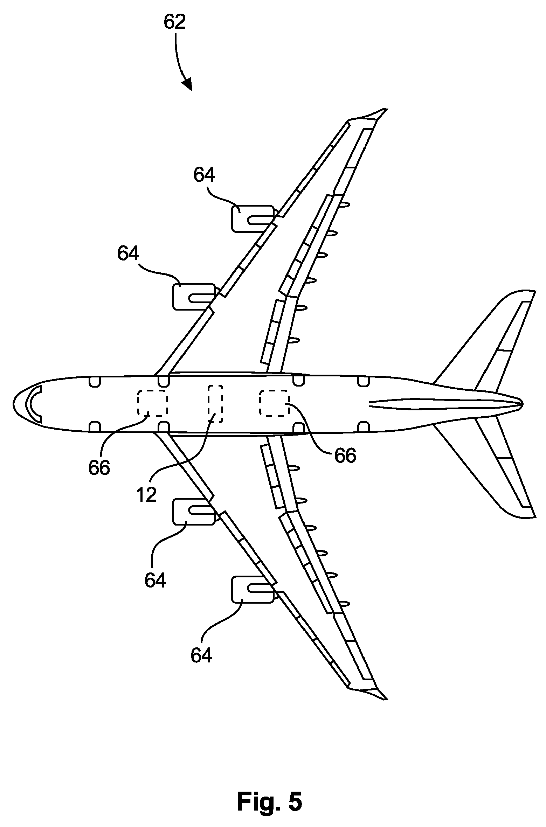

Schließlich zeigt Fig. 5 ein Flugzeug 62, das Triebwerke 64 und mehrere elektrische Verbraucher 66 aufweist, sowie ein erfindungsgemäßes Brennstoffzellensystem 12 gemäß Fig. 2.

Ergänzend sei darauf hinzuweisen, dass "aufweisend" keine anderen Elemente oder Schritte ausschließt und "ein" oder "eine" keine Vielzahl ausschließt. Bezugszeichen in den Ansprüchen sind nicht als Einschränkungen anzusehen.

BEZUGSZEICHEN

| | |
|---|---|
| 2 | Membranwiderstand |
| 4 | Ladungsdurchtrittswiderstand |
| 6 | Doppelschichtkapazität |
| 8 | Leitfähigkeit |
| 10 | Polarisation |
| 12 | Brennstoffzellensystem |
| 14 | Brennstoffzellenstapel |
| 16 | Brennstoffzelle |
| 18 | Befeuchtungssteuereinheit |
| 20 | Prozessoreinheit |
| 22 | Erfassungseinheit |
| 24 | Unterbrechereinheit |
| 26 | Pufferspeicher |
| 28 | elektrischer Verbraucher |
| 30 | Spannungsausgang |
| 32 | erster Signaleingang |
| 34 | erster Signalausgang |
| 36 | Entnahmestrom |
| 38 | Abgabespannung |
| 40 | Erfassen |
| 42 | Übermitteln |
| 44 | Auswerten |
| 46 | Zeitkonstante ermitteln |
| 48 | Vergleichen |
| 50 | Veranlassen |
| 52 | Befeuchtung ändern |
| 54 | Befeuchtung erhöhen |
| 56 | Befeuchtung reduzieren |
| 58 | Kapazität ermitteln |
| 60 | Vergleichen |
| 62 | Flugzeug |
| 64 | Triebwerk |
| 66 | elektrischer Verbraucher |

**Patentansprüche**

1. Vorrichtung zum Regeln der Luftfeuchte in einer Brennstoffzelle (16), aufweisend:

    - mindestens eine Prozessoreinheit (20);
    - mindestens eine Erfassungseinheit (22) und
    - mindestens eine Unterbrechereinheit (24);

wobei die Prozessoreinheit (20) mit der Unterbrechereinheit (24) verbunden ist und einen mit einem Signalausgang (30) der Erfassungseinheit (22) verbundenen ersten Signaleingang (32) und einen mit einem Steuereingang einer Befeuchtungssteuereinheit (18) der Brennstoffzelle (16) verbindbaren ersten Signalausgang (34) aufweist;

wobei die Erfassungseinheit (22) zum Verbinden mit der Brennstoffzelle (16) und zum Erfassen der Abgabespannung der Brennstoffzelle (16) eingerichtet ist,

wobei die Prozessoreinheit (20) dazu eingerichtet ist, eine Verbindung zwischen der Brennstoffzelle (16) und elektrischen Verbrauchern (28) für einen Zeitraum T durch Ansteuern der Unterbrechereinheit (24) zu unterbrechen und aus einer daraus resultierenden Sprungantwort der Abgabespannung der Brennstoffzelle (16) eine Zeitkonstante des Spannungsabfalls zu ermitteln und die Befeuchtungssteuereinheit (18) in

Abhängigkeit von einer Abweichung der ermittelten Zeitkonstante von einer vorgegebenen Zeitkonstante anzusteuern,

wobei die Prozessoreinheit (20) dazu eingerichtet ist, die ermittelte Zeitkonstante mit einer vorgegebenen Zeitkonstante zu vergleichen und bei Unterschreiten einer vorgegebenen Zeitkonstante um mehr als eine vorgegebene Toleranz die Befeuchtungssteuereinheit (18) dazu zu veranlassen, die Befeuchtung der Brennstoffzelle (16) zu reduzieren.

2. Vorrichtung nach Anspruch 1,
aufweisend mehrere Erfassungseinheiten (22) zum individuellen Erfassen der Abgabespannung mehrerer Brennstoffzellen (16) eines Brennstoffzellenstapels (14).

3. Vorrichtung nach Anspruch 2, wobei eine Erfassungseinheit (22) dazu eingerichtet ist, sich mit mehreren zusammengeschalteten Brennstoffzellen (16) verbinden zu lassen.

4. Vorrichtung nach einem der vorhergehenden Ansprüche, wobei die Prozessoreinheit (20) dazu eingerichtet ist, bei Erreichen einer vorgegebenen Zeitkonstante die Befeuchtungssteuereinheit (18) dazu zu veranlassen, die Befeuchtung der Brennstoffzelle (16) zu erhöhen.

5. Vorrichtung nach einem der vorhergehenden Ansprüche, ferner aufweisend einen Pufferspeicher (26) zum Überbrücken der Versorgung elektrischer Verbraucher (28) beim Ermitteln der Sprungantwort der Abgabespannung.

6. Vorrichtung nach einem der vorhergehenden Ansprüche, wobei der Zeitraum T zwischen 50ms und 150ms beträgt.

7. Vorrichtung nach einem der Ansprüche 1 bis 5, wobei der Zeitraum T zwischen 150ms und 500ms beträgt.

8. Vorrichtung nach einem der vorhergehenden Ansprüche, wobei die Prozessoreinheit (20) dazu eingerichtet ist, aus der Sprungantwort mindestens eine Doppelschichtkapazität (6) und/oder einen Membranwiderstand (2) der Brennstoffzelle (16) zu bestimmen und mit einer vorgegebenen Doppelschichtkapazität bzw. einem vorgegebenen Membranwiderstand zu vergleichen und die Befeuchtungssteuereinheit (18) in Abhängigkeit von einer jeweiligen Abweichung anzusteuern.

9. Brennstoffzellensystem, aufweisend mindestens eine Brennstoffzelle (16) sowie mindestens eine Vorrichtung nach einem der Ansprüche 1 bis 8.

10. Verfahren zum Regeln der Luftfeuchte einer Brennstoffzelle (16), aufweisend die Schritte:

- Unterbrechen einer Verbindung zwischen der Brennstoffzelle (16) und elektrischen Verbrauchern (28) für einen Zeitraum T;
- Erfassen (40) einer Sprungantwort der Abgabespannung an der Brennstoffzelle (16) mittels einer Erfassungseinheit (22);
- Übermitteln (42) des erfassten Spannungsverlaufs an eine Prozessoreinheit (20);
- Ermitteln (46) einer Zeitkonstante des Spannungsabfalls aus der Sprungantwort der Abgabespannung der Brennstoffzelle (16) mit Hilfe der Prozessoreinheit (20);
- Vergleichen (48) der Zeitkonstante mit einer vorgegebenen Zeitkonstante; und
- bei Unterschreiten der vorgegebenen Zeitkonstante außerhalb einer tolerierbaren Grenze Veranlassen (50) einer Befeuchtungssteuereinheit (18), die Befeuchtung der Brennstoffzellen (16) zu reduzieren (56).

11. Verfahren nach Anspruch 10, ferner aufweisend den Schritt:

- bei Erreichen einer vorgegebenen Zeitkonstante Veranlassen einer Befeuchtungssteuereinheit (18), die Befeuchtung der Brennstoffzellen (16) zu erhöhen (54).

12. Verwendung eines Brennstoffzellensystems (12) nach Anspruch 9 in einem Flugzeug (62).

13. Flugzeug (62) mit mindestens einem Triebwerk (64), mindestens einem elektrischen Verbraucher (28) und mindestens einem Brennstoffzellensystem (12) nach Anspruch 9 .

**Claims**

1. Device for controlling the air humidity in a fuel cell (16), comprising:

- at least one processor unit (20);
- at least one detection unit (22); and
- an interrupter unit (24);

wherein the processor unit (20) is connected to the interrupter unit (24) and comprises a first signal input (32), which is connected to a signal output (30) of the detection unit (22), and a first signal output (34), which is connectable to a control input of a humidity control unit (18) of the fuel cell (16);

wherein the detection unit (22) is set up for connection to the fuel cell (16) and for detecting the output voltage of the fuel cell (16);

wherein the processor unit (20) is set up to separate electrical loads (28) from the fuel cell (16) for a predetermined period T through actuating the interrupter unit (24) and to determine a time constant of the voltage drop from a step response of the voltage progression resulting therefrom and to actuate the humidity control unit (18) as a function of a deviation of the determined time constant from a predetermined time constant,

wherein the processor unit (20) is set up so as to compare the determined time constant with a predetermined capacitance, and if this falls below a predetermined time constant by more than a predetermined tolerance, to cause the humidity control unit (18) to reduce the humidity of the fuel cell (16)

2. Device according to claim 1, comprising a plurality of detection units (22) for individually detecting the output voltage of a plurality of fuel cells (16) of a fuel cell stack (14).

3. Device according to claim 2, wherein a detection unit (22) is set up in such a way that it is connectable to a plurality of interconnected fuel cells (16).

4. Device according to any one of the preceding claims, wherein the processor unit (20) is set up so as to cause the humidity control unit (18) to increase the humidity of the fuel cell (16) when a predetermined time constant is achieved.

5. Device according to any one of the preceding claims, further comprising a buffer (26) for bridging the supply to electrical loads (28) when the step response of the output voltage is determined.

6. Device according to any one of the preceding claims, wherein the period T is between 50 ms and 150 ms.

7. Device according to any one of claims 1 to 5, wherein the period T is between 150 ms and 500 ms.

8. Device according to any one of the preceding claims, wherein the processor unit (20) is set up so as to determine at least a double-layer capacitance (6) and/or a membrane resistance (2) of the fuel cell (16) from the step response and to compare these with a predetermined double-layer capacitance and/or a predetermined membrane resistance and to actuate the humidity control unit (18) as a function of a respective deviation.

9. Fuel cell system, comprising at least one fuel cell (16) and at least one device according to any one of claims 1 to 8.

10. Method for controlling the air humidity of a fuel cell (16), comprising the steps of:

- interrupting a connection between the fuel cell (16) and electrical loads (28) for a period T;
- detecting (40) a step response of the output voltage across the fuel cell (16) by means of a detection unit (22);
- communicating (42) the detected voltage progression to a processor unit (20);
- determining (46) a time constant of the voltage drop from the step response of the output voltage of the fuel cell (16) by means of the processor unit (20);
- comparing (48) the time constant with a predetermined time constant; and
- if this falls below the predetermined time constant beyond an acceptable limit, causing (50) a humidity control unit (18) to reduce (56) the humidity of the fuel cells (16).

11. Method according to claim 10, further comprising the step of:

- causing a humidity control unit (18) to increase (54) the humidity of the fuel cells (16) when a predetermined time constant is achieved.

12. Use of a fuel cell system (12) according to claim 9 in an aircraft (62).

13. Aircraft (62) having at least one engine (64), at least one electrical consumer (28) and at least one fuel cell system according to claim 9.


**Revendications**

1. Dispositif de régulation de l'humidité atmosphérique dans une pile à combustible (16), présentant :

- au moins une unité de processeur (20) ;
- au moins une unité de saisie (22) et
- au moins une unité de coupure (24) ;

dans lequel l'unité de processeur (20) est reliée à l'unité de coupure (24) et présente une première entrée de signal (32), reliée à une sortie de signal (30) de l'unité de saisie (22), et une première sortie de signal (34) pouvant être reliée à une entrée de commande d'une unité de commande d'humidification (18) de la pile à combustible (16) ;

dans lequel l'unité de saisie (22) est adaptée pour la liaison avec la pile à combustible (16) et pour la saisie de la tension de décharge de la pile à combustible (16),

dans lequel l'unité de processeur (20) est adaptée pour interrompre une liaison entre la pile à combustible (16) et des consommateurs électriques (28) pour une période de temps T par activation de l'unité de coupure (24) et pour déterminer une constante de temps de la baisse de tension à partir d'une réponse à un échelon, qui en résulte, de la tension de décharge de la pile à combustible (16) et pour activer l'unité d'humidification (18) en fonction d'une divergence de la constante de temps par rapport à une constante de temps prédéfinie,

dans lequel l'unité de processeur (20) est adaptée pour comparer la constante de temps déterminée avec une constante de temps prédéfinie et, en cas de dépassement vers le bas d'une constante de temps prédéfinie de plus d'une tolérance prédéfinie, pour amener l'unité d'humidification (18) à réduire l'humidification de la pile à combustible (16).

2. Dispositif selon la revendication 1, présentant plusieurs unités de saisie (22) pour la saisie individuelle de la tension de décharge de plusieurs piles à combustible (16) d'un empilement (14) de piles à combustible.

3. Dispositif selon la revendication 2, dans lequel une unité de saisie (22) est adaptée pour se faire relier à plusieurs piles à combustibles (16) interconnectées.

4. Dispositif selon l'une quelconque des revendications précédentes, dans lequel l'unité de processeur (20) est adaptée pour amener l'unité d'humidification (18), lorsqu'une constante de temps prédéfinie est obtenue, à augmenter l'humidification de la pile à combustible (16).

5. Dispositif selon l'une quelconque des revendications précédentes, présentant en outre une mémoire tampon (26) destinée à fournir l'alimentation de consommateurs électriques (28) lors de la détermination de la réponse à un échelon de la tension de décharge.

6. Dispositif selon l'une quelconque des revendications précédentes, dans lequel la période de temps T est comprise entre 50 ms et 150 ms.

7. Dispositif selon l'une quelconque des revendications 1 à 5, dans lequel la période de temps T est comprise entre 150 ms et 500 ms.

8. Dispositif selon l'une quelconque des revendications précédentes, dans lequel l'unité de processeur (20) est adaptée pour déterminer au moins une capacité de double couche (6) et/ou une résistance de membrane (2) de la pile à combustible (16) à partir de la réponse à un échelon et pour la comparer avec une capacité de double couche prédéfinie, respectivement avec une résistance de membrane prédéfinie, et pour activer l'unité d'humidification (18) en fonction d'une divergence respective.

9. Système de pile à combustible, présentant au moins une pile à combustible (6) ainsi qu'au moins un dispositif selon l'une quelconque des revendications 1 à 8,

10. Procédé de régulation de l'humidité atmosphérique d'une pile à combustible (16), présentant les étapes :

   - interruption d'une liaison entre la pile à combustible (16) et des consommateurs électriques (28) pour une période de temps T ;
   - saisie (40) d'une réponse à un échelon de la tension de décharge sur la pile à combustible (16) au moyen d'une unité de saisie (22) ;
   - transmission (42) à une unité de processeur (20) de la courbe de tension ;
   - détermination (46) d'une constante de temps de la baisse de tension à partir de la réponse à un échelon de la tension de décharge de la pile à combustible (16) à l'aide de l'unité de processeur (20) ;
   - comparaison (48) de la constante de temps avec une constante de temps prédéfinie ; et
   - en cas de dépassement vers le bas de la constante de temps prédéfinie en dehors d'une limite tolérable, amener (50) une unité d'humidification (18) à réduire (56) l'humidification des piles à combustible (16).

11. Procédé selon la revendication 10, présentant en outre l'étape :

   - lorsqu'une constante de temps prédéfinie est obtenue, amener une unité d'humidification (18) à augmenter (58) l'humidification des piles à combustible (16).

12. Utilisation dans un avion (62) d'un système de pile à combustible (12) selon la revendication 9.

13. Avion (62) comprenant au moins un réacteur (64), au moins un consommateur électrique (28) et au moins un système de pile à combustible (12) selon

la revendication 9.

**Fig. 1a**

**Fig. 1b**

**Fig. 1c**

**Fig. 2**

**Fig. 3**

**Fig. 4**

62

64

64

66

12

66

64

64

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1501146 A2
- JP 2003346850 A
- US 20050092617 A
- US 20070196708 A1
- US 6376111 B
- JP 2005166601 A